# EUROPEAN PATENT APPLICATION

(11) **EP 0 865 219 A2**
(43) Date of publication of application: **16.09.1998**
(21) Application number: 98850030.2
(22) Date of filing: 09.03.1998
(51) Int. Cl.: H04Q 7/26, H04Q 7/24, H04Q 7/38

(54) **Arrangement for mobile telephony**

(30) Priority: 14.03.1997 SE 9700929
(71) Applicant: TELIA AB, 123 86 Farsta (SE)
(72) Inventor: Björk, Christer, 238 43 Oxie (SE)
(74) Representative: Akerman, Marten Lennart

(57) **Abstract**

The invention relates to an arrangement for mobile telephony and more exactly an arrangement to utilize mobile telephone systems in office telephony applications. The invention especially can make possible a combination of local mobility under a private branch exchange (PBX) and ordinary mobile telephony with the same terminal, i.e. mobile telephone. According to the invention the arrangement has a subsystem which includes a base station system (BSS) which is of mobile telephony type for communication with mobile terminals, a mobility server to handle the base station system and provide access to at least one public telecommunications system (PSTN) and one private branch exchange (PBX) to provide PBX-functions in the subsystem. The mobile terminals by that will become mobile locally under the private branch exchange. Preferably the mobility server also provides access to at least one public mobile telephone system (PLMN), at which the mobile terminals are also mobile under the public mobile telephone system.

## Description

### FIELD OF THE INVENTION

The present invention relates to an arrangement for mobile telephony and more exactly an arrangement to utilize mobile telephone systems in office telephony applications. Especially, the invention can make possible a combination of local mobility under a private branch exchange (PBX) and ordinary mobile telephony with the same terminal, i.e. mobile telephone. A mobility server connects the fixed telecommunications network with the mobile telephone network. Under the mobility server there is a local base station system which is of mobile telephony type.

### PRIOR ART

There are today wireless office telephony systems, for instance DECT (Digital European Cordless Telephone). In such a system the subscriber has access to all the services which are offered by an ordinary private branch exchange, PBX. A problem is that the mobile terminals only can be used in the local system. Further, the system has not yet got an extensive use, which means that there is only a small assortment with comparatively expensive terminals.

It also has been suggested to use mobile telephony together with MVPN (Mobile Virtual Private Network) which also provides the same services as in an ordinary private branch exchange, PBX. A problem with this is that one opens for internal traffic, i.e. traffic which might be connected locally at the customer's, in the mobile network. In addition the MVPN-service requires IN-capacity, which results in costs for the operator in addition to costs for the increased traffic. At calls to the fixed network, which can be regarded to be predominant today, also fees for combined services will be added.

Another problem at office telephone application with mobile telephone systems is that it can be difficult to charge for the local mobility.

The present invention solves the problem by a base station system of mobile telephony type being arranged at the customer's. The base station system is connected to a so called mobility server. The mobility server includes a routing facility and a customer controlled network database. By the routing facility and the network database a hybrid access solution is obtained with one access route to the public mobile telephony network, when the terminals are outside the local base station system, and one access route to the private branch exchange, PBX, under the local base station system. When the user is under the base station system, which belongs to the mobility server, consequently a wireless private branch exchange functionality is obtained. A complete and in both directions automatic roaming between the private and the public environment can by that be realized.

### SUMMARY OF THE INVENTION

Consequently the present invention provides an arrangement for mobile telephony of above mentioned type. According to the invention the arrangement has a subsystem which includes a base station system for communication with mobile terminals, a mobility server to handle the base station system and provide access to at least one public telecommunications system, and a private branch exchange device to provide PBX-functions in the subsystem. The mobile terminals by that will be mobile locally under the private branch exchange device.

Preferably the mobility server also provides access to at least one public mobile telephone system, at which the mobile terminals are also mobile under the public mobile telephone system.

The invention is defined in detail i patent claim 1, whereas advantageous embodiments of the invention are defined in the subclaims.

### BRIEF DESCRIPTION OF THE DRAWING

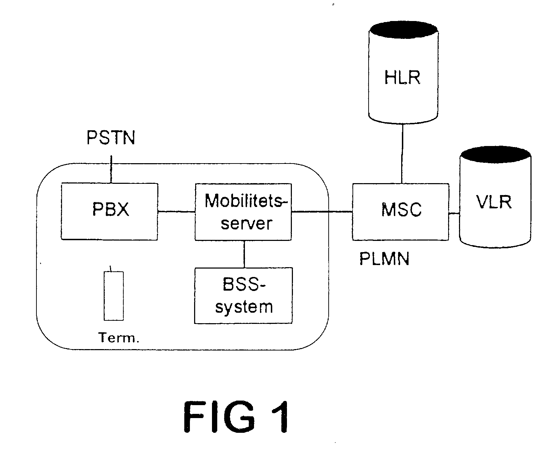

The invention will be explained more in detail below with reference to enclosed drawing, of which the only Figure 1 illustrates a block diagram over a draft of an architecture for the arrangement according to the present invention.

### DETAILED DESCRIPTION OF PREFERRED EMBODIMENTS

Wireless telephony has become more and more popular thanks to the technical development, and it is supposed that office telephony applications with wireless technology, for instance DECT, or mobile telephony, for instance GSM 900 or DCS 1800 will increase in the future.

For several years a lot of people have seen DECT as the only technical solution to offer local mobility. The idea to instead of that use mobile telephony as technical solution for local mobility is newer. The advantage of this solution is chiefly better integration possibility with the public mobile telephony network, and that the terminal market is expected to become broader. Possibly the mobile telephony also has a lead regarding time. The DECT-systems which exist on the market today do not have compatible air interfaces. The competition is also poor due to that too few manufacturers have finished products. Perhaps as a result of this DECT has not yet reached the low price levels which judges have expected to be reached in the long run.

In an office telephony application the connection to the customer's existing private branch exchange, PBX, is important. In DECT one has access to all the services which are offered in an ordinary private branch exchange, which is an important advantage. With mobile telephony together with MVPN, Mobile Virtual Private Network, the same services as in a private branch exchange are made possible in the long run.

By the frequency allocations which many operators today have been given, or will be given, in the 1800-band, the possibility to make office telephony grow with for instance GSM will increase. As has been mentioned above, however, there are problems associated with both DECT and GSM in combination with MVPN. The present invention therefore suggests that a separate subsystem which is based on for instance GSM is installed at the customer's.

In Figure 1 is described an example of an architecture according to the present invention. The subsystem which is installed at the customer's includes the components within the rounded frame. Consequently there is the ordinary private branch exchange, PBX, and mobile terminals, Term. These components can be of conventional type. The subsystem also includes a base station system BSS, for instance of the mobile telephony type GSM 900 or DCS 1800. The base station system is connected to a so called mobility server which includes at least routing facility and a customer controlled network database. By the routing facility and the network database a hybrid access solution is obtained with one access route to the public mobile telephony network, and one access route to the private branch exchange environment. When the user is under the to the BSS-system belonging mobility server, a wireless private branch exchange functionality is obtained.

The subsystem is on one hand connected to the PSTN (Public Switched Telephone Network) and on the other to a mobile telephone network PLMN (Public Land Mobile Network). As is shown, the mobile telephone network can be of GSM-type which includes an MSC (Mobile Switching Center), HLR (Home Location Register) and a VLR (Visitor Location Register).

Each user in the customer located subsystem preferably has a mobile telephony identity (subscription) in the Home Location Register, HLR, of the mobile telephone. By the connection to the MSC/HLR, complete roaming between the private and the public environment can be realized. The roaming is automatic in both directions, i.e. when the user with his/her terminal is passing out from the subsystem, the terminal automatically functions as an ordinary mobile telephone. When the user passes into the subsystem, the terminal is switched to a wireless office telephone under the local private branch exchange, PBX. The signal link between MSC/HLR and the mobility server can with advantage be used both for signalling and traffic between the customer located system and the public mobile telephony network.

The interface between the subsystem and the mobile telephone network PLMN can for instance function according to MAP/ISUP (Mobile Application Part/ISDN User Part) or DSS.1+. The subsystem preferably can use QSIG-signalling to the private branch exchange, PBX.

The arrangement according to the present invention has the following important characteristics and advantages: There is a close connection to the private branch exchange environment. The base station system is practically integrated with the private branch exchange, PBX. There is a complete integration with the public mobile telephone network. The arrangement provides automatic MDA-connection (Mobile Direct Access) to minimize combined services fees. The internal traffic is not routed through the Mobile Switching Centre, MSC. The subsystem will, from a GSM-network perspective, become an MSC/VLR-field. Addressing cooperation with the private branch exchange environment need not be realized as an MVPN-service, at which IN-capacity (IN = Intelligent Network) is saved. At the same time turning switching trains in the GSM-network caused by incoming calls from the fixed network to users in the private branch exchange environment are avoided. By the PBX-connection efficient dataservices can be offered via GPRS (General Packed Radio Service) and HSCSD (High Speed Circuit Switched Data).

In the described embodiment the mobile telephone system and the base station system BSS are of the type GSM. The invention is not limited to this, but one may use any cellular radio access technology, for instance also D-AMPS, PDC etc. It is also possible to provide a simpler version of the arrangement, in which the mobile terminals only has a local mobility in the subsystem. At this, the terminals have no identity in the mobile telephone system because they shall not be used there. In the simpler version, the advantages of the cheaper mobile telephone terminals and the air interface are still utilized. The extent of protection of the invention is only limited by the patent claims below.

## Claims

1. Arrangement for mobile telephony,
**characterized** in that a subsystem including a base station system (BSS) for communication with mobile terminals, a mobility server to handle the base station system and provide access to at least one public telecommunications system (PST; PLMN), and a private branch exchange (PBX) to provide PBX-functions in the subsystem, at which the mobile terminals (Term.) are mobile locally under the private branch exchange device.

2. Arrangement according to patent claim 1,
**characterized** in that the mobility server provide access to at least one public mobile telephone system (PLMN), at which the mobile terminals also are mobile under the public mobile telephone system.

3. Arrangement according to patent claim 2,
**characterized** in that the terminals are automatically switched between local mobility and mobility under the public mobile telephone system.

4. Arrangement according to patent claim 2 or 3,
**characterized** in that the mobile terminals have a terminal identity in the public mobile telephone system.

5. Arrangement according to any of the previous patent claims, **characterized** in that the mobility server includes routing device and a customer controlled network database.

6. Arrangement according to any of the previous patent claims, **characterized** in that the base station system (BSS) is one of the types GSM 900, DCS 1800, D-AMPS or PDC.

7. Arrangement according to any of the previous patent claims, **characterized** in an interface between the mobility server and the public mobile telephone system, which interface is of one of the types MAP/ISUP or DSS.1+.

8. Arrangement according to any of the previous patent claims, **characterized** in that the subsystem for instance utilizes QSIG-signalling to the private branch exchange.
